# EUROPEAN PATENT APPLICATION

(11) **EP 4 685 926 A1**
(43) Date of publication of application: **28.01.2026**
(21) Application number: 25187234.7
(22) Date of filing: 03.07.2025
(51) Int. Cl.: H01M 10/613, H01M 10/625, H01M 50/204, H01M 50/249, H01M 50/383

(54) **SUPPRESSANT MANAGEMENT**

(30) Priority: 22.07.2024 GB 202410672
(71) Applicant: Fortescue Zero Limited, Kidlington, England OX5 1GB (GB)
(72) Inventor: PAINTER, Alex, Kidlington, OX5 1GB (GB); VESMA, Nathan, Kidlington, OX5 1GB (GB)
(74) Representative: HGF

(57) **Abstract**

Disclosed is an electrical power storage system (14) comprising an electrical power source enclosure (20) and a suppressant collector (36). The enclosure (20) is arranged to seal an electrical power source (22) therein and comprises a first venting aperture (26) arranged to allow venting of gas generated by the electrical power source (22) when undergoing an over-heating event to outside of the enclosure (20). The first venting aperture (26) is provided through an enclosure side wall (24) of the enclosure (20). The suppressant collector (36) is arranged outside of the enclosure (20) and to collect a part of a volume of liquid suppressant when released into the enclosure (20), the part of the volume of suppressant leaving the enclosure (20) via the first venting aperture (26). The suppressant collector (36) comprises an exit aperture (52) providing an exit from the suppressant collector (36), where the exit aperture (52) is at a higher level than the first venting aperture (26).

## Description

### TECHNICAL FIELD

The present disclosure relates to a suppressant management. Aspects of the invention relate to an electrical power storage system and a vehicle.

### BACKGROUND

It is known to deliver liquid suppressant into electrical power storage system enclosures (e.g. battery enclosures) when required (e.g. when a thermal event such as overheating or fire is detected). In order to function effectively, the suppressant may need to build-up within the enclosure e.g. to submerge an electrical power source (such as a battery) therein. For this reason, vents designed to open (e.g. by burst disc or valve) to release gas generated in the thermal event, tend to be provided at the top of the relevant enclosure. This means that the vents do not allow suppressant to flow away before it has accumulated sufficiently (i.e. reached a desired level within the enclosure). Nonetheless, it may be undesirable to be constrained in terms of the physical locating of such vents to e.g. the top of the enclosure. It may be for instance that it is desired to place other components on top of the enclosure and/or further enclosures containing one or more electrical power sources. Consequently, there is a difficulty in both providing for effective suppressant performance and in providing design/packaging freedom allowing for an enhanced design in other respects (e.g. compact design and efficiency in terms of material usage).

It is an aim of the present invention to address one or more of the disadvantages associated with the prior art.

### SUMMARY OF THE INVENTION

According to a first aspect of the invention there is a provided an electrical power storage system comprising an electrical power source enclosure and a suppressant collector, where
the enclosure is arranged to seal an electrical power source therein and comprises a first venting aperture arranged to allow venting of gas generated by the electrical power source when undergoing an over-heating event to outside of the enclosure, where the first venting aperture is provided through an enclosure side wall of the enclosure and where
the suppressant collector is arranged outside of the enclosure and to collect a part of a volume of liquid suppressant when released into the enclosure, the part of the volume of suppressant leaving the enclosure via the first venting aperture and where
the suppressant collector comprises an exit aperture providing an exit from the suppressant collector, where the exit aperture is at a higher level than the first venting aperture.

The suppressant may be released from inside the enclosure or delivered into the enclosure from outside of it, in either case under the control of a control system. The suppressant may be for reducing heat and/or preventing/extinguishing/managing fire. The control system might for instance trigger release of the suppressant in accordance with sensor data it receives which might for instance be indicative of overheating of one or more cells and/or detection of a fire. The suppressant may for instance be LifeSafe Pre-Trauma Fluid or another dielectric fluid. In order to manage a thermal event (or manage it more effectively) the suppressant may need to reach a particular level within the enclosure and/or substantially fill the enclosure e.g. to fully submerge the electrical power source.

Whilst conventionally, one or more venting apertures might be provided through a top wall of the enclosure, it may be desirable/necessary e.g. for packaging/component arrangement reasons or gas venting reasons, to position the first venting aperture at another, lower location (e.g. in the enclosure side wall) than would be suited to maintaining a desirable/required depth of suppressant in the enclosure when it is released. It may be for instance that the first venting aperture is located in the bottom half of the enclosure side wall and/or with such that the lowest part of the first venting aperture is at substantially the bottom of the enclosure side wall.

The height difference in the first venting aperture and exit aperture may tend to require that for liquid in the suppressant collector to leave the suppressant collector, the first venting aperture should be at least partially submerged. This may ensure a minimum fill depth of the enclosure with suppressant and so greater effectiveness of the suppressant rather than it simply running away out of the first venting aperture and therefore potentially achieving no greater depth in the enclosure than the height of the lowest part of the first venting aperture.

The exit aperture may be the only and/or lowest level exit from the suppressant collector. The suppressant collector may for instance otherwise be and/or at least below the exit aperture be, a sealed structure when arranged for operation. The suppressant collector may be small in volume by comparison with the volume of the enclosure in order that it does not store a significant volume of suppressant. This may reduce the volume required to accommodate the suppressant collector and/or reduce the quantity of suppressant that is needed in order (for instance) to submerge the electrical power source. The volume of the suppressant collector might for example be between two and three orders of magnitude smaller than the volume of the enclosure when the enclosure contains operational equipment including for instance the electrical power source.

The maintaining of the sealed nature of the enclosure prior to the venting of the gas and/or the release of the suppressant may be achieved at least in part by a burst disc or valve sealing the first venting aperture (until burst/actuated).

The suppressant collector may at least substantially surround the first venting aperture. It may, at least substantially provide a sealed enclosure but for the exit aperture. The exit aperture may allow generated gas and/or suppressant to leave the suppressant collector and optionally, ultimately, to be vented (e.g. to atmosphere).

The enclosure side wall may (at least under normal operating conditions) be substantially vertical. For instance, were the electrical power storage system to be installed in a land vehicle, the enclosure side wall might be substantially vertically oriented with the vehicle standing on level ground.

The electrical power source may for instance be a battery cell or battery.

In some embodiments all of the exit aperture is at a higher level than all parts of the first venting aperture.

In this way, the height of the first venting aperture may be considered at least largely immaterial to the fill level of suppressant that will be achieved within the enclosure when the suppressant is released. Consequently, the location (and in particular the height) of the first venting port may be selected at least largely without restrictions associated with desired/necessary suppressant fill level of the enclosure.

In some embodiments all of the exit aperture is at a higher level than a top of the electrical power source when installed in an operational configuration in the enclosure.

In this way, it may be that the electrical power source is at least likely to be submerged in suppressant when the suppressant is released. Indeed, some additional margin in terms of the height of the exit aperture may be provided in order to ensure that in most or all intended/conceivable operating conditions, the electrical power source will be submerged by suppressant when the suppressant is released. It may for instance be that the height of the exit aperture is at a height level sufficient such that suppressant will substantially reach a top of the enclosure when the suppressant is released.

In some embodiments the first venting aperture is substantially circular.

This may be convenient/desirable in terms of providing sealing to the first venting aperture (e.g. using a burst disc or valve).

In some embodiments the exit aperture is substantially rectangular.

This may allow for a higher flow area for a given vertical extent of the exit aperture (e.g. by comparison with a circular exit aperture). This may be desirable in giving the desired/required flow area (e.g. in order not to generate excessive pressure of venting gas and/or suppressant in the enclosure in the event of a thermal event) whilst maintaining a higher level of the lowest part of the exit aperture. The provision of a higher level of the lowest part of the exit aperture may allow for a higher fill level of suppressant in the enclosure when the suppressant is released.

In some embodiments the enclosure comprises a second venting aperture also arranged to allow venting of gas generated by the electrical power source when undergoing an over-heating event to outside of the enclosure and where the second venting aperture is provided through the enclosure side wall and is at a higher level than the first venting aperture.

It may be for instance that the second venting aperture is substantially above (i.e. substantially vertically aligned with and at a higher level than the first venting aperture). Stacking the first and second venting apertures in this way may be beneficial from a packaging perspective.

The second venting aperture may also lead into the suppressant collector. The provision of the additional venting aperture may provide additional area for the flow of venting gas and/or suppressant out of the enclosure. This may be necessary/desirable in order that excessive pressure build-up in the enclosure from venting gas and/or suppressant can be avoided in the event of a thermal event.

The second venting aperture may be substantially circular. The second venting aperture may be sealed by a burst disc or valve (until burst/actuated).

In some embodiments the enclosure side wall also serves as collector rear wall of the suppressant collector.

This may be more efficient and reduce the volume of space required for the provision of the suppressant collector.

In some embodiments a collector top wall of the suppressant collector is formed by an extension of an enclosure top wall of the enclosure and/or a collector bottom wall of the suppressant collector is formed by an extension of an enclosure bottom wall of the enclosure.

This may be more efficient and reduce the volume of space required for the provision of the suppressant collector, especially where the relevant extension of the enclosure top wall and/or enclosure bottom wall is provided for another/additional purpose, e.g. as a flange by which to secure the enclosure.

In some embodiments at least one collector side wall of the suppressant collector is formed by a rib projecting from the enclosure side wall.

The rib may for instance be substantially vertically aligned and/or project substantially perpendicularly from the enclosure side wall. The rib may be intrinsically part of the enclosure side wall and/or may for instance be provided, at least in part, for strengthening of the enclosure side wall. Using such a rib may be more efficient and reduce the volume of space required for the provision of the suppressant collector.

In some embodiments the electrical power storage system comprises a further electrical power source enclosure and a further suppressant collector, where
the further enclosure is arranged to seal a further electrical power source therein and comprises a further first venting aperture arranged to allow venting of gas generated by the further electrical power source when undergoing an over-heating event to outside of the further enclosure, where the further first venting aperture is provided through a further enclosure side wall of the further enclosure and where
the further suppressant collector is arranged outside of the further enclosure and to collect a further part of a further volume of liquid suppressant released into the further enclosure, when the further part of the further volume of suppressant leaves the further enclosure via the further first venting aperture and where
the further suppressant collector comprises a further exit aperture providing an exit from the further suppressant collector, where the further exit aperture is at a higher level than the further first venting aperture, and
the enclosure and further enclosure are arranged for use in a stacked manner with one on top of the other.

Therefore the enclosure, first venting aperture (and indeed optionally the second venting aperture) and suppressant collector with its associated exit aperture may be replicated one or indeed multiple times and form part of the electrical power storage system. Further, the replicated instances may have any of the characteristics previously discussed.

With the enclosure, further enclosure and indeed any additional instances of the enclosure stacked on top of each other, venting of gas through an enclosure top wall of any of the enclosures on which is stacked another may be undesirable. Especially in such instances, the system of enclosure side wall venting as previously described may be preferable.

The enclosure and further enclosure may be or be part of a modular electrical power storage system. It may be for instance that a tray or housing unit forming a bottom part of the enclosure forms a sealing lid for a similar tray or housing unit of the further enclosure.

In some embodiments the exit aperture and further exit aperture feed a common exhaust conduit arranged to deliver the generated gas and/or the suppressant to or towards an external vent.

Consequently, the exit aperture and further exit aperture may be in fluid communication via the common exhaust conduit. Use of the common exhaust conduit may be an efficient way to remove generated gas and/or suppressant from the exit aperture and further exit aperture. Further, as will be appreciated, the common exhaust conduit may be in fluid communication with corresponding exit apertures of each of any number of suppressant collectors associated with a corresponding number (e.g. more than two) of stacked enclosures of the electrical power storage system.

In some embodiments the further suppressant collector is arranged with respect to the further enclosure in a corresponding manner to the suppressant collector with respect to the enclosure.

Consequently, where the enclosure and the further enclosure are stacked in an aligned manner, the suppressant collector and the further suppressant collector may also be substantially aligned (e.g. vertically and horizontally aligned). This may for instance be convenient in terms of an efficient common exhaust conduit arrangement, which might for instance be formed at least in part by a stand-off cover over the exit aperture and further exit aperture (and indeed any additional exit apertures associated with any additional instances of the suppressant collector and enclosure). Such a cover may for instance extend vertically in a continuous manner, standing-off from and covering all such exit apertures.

According to a second aspect of the invention there is provided a vehicle comprising the electrical power storage system of the first aspect.

In some embodiments the electrical power source is a traction battery of the vehicle. Similarly, the further electrical power source (and indeed any additional electrical power sources associated with additional instances of the enclosure may be traction batteries). The vehicle may therefore be an electric vehicle (EV).

The vehicle may be a land vehicle, for instance a passenger vehicle (such as a car or bus) or haulage vehicle (such as a haul truck).

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
**Figure 1** shows a perspective view of a vehicle according to an embodiment of the invention;
**Figure 2** shows a perspective view of a tray of an enclosure according to an embodiment of the invention;
**Figure 3** shows a perspective view of part of an electrical power storage system according to an embodiment of the invention;
**Figure 4** shows a perspective view of part of an electrical power storage system according to an embodiment of the invention; and

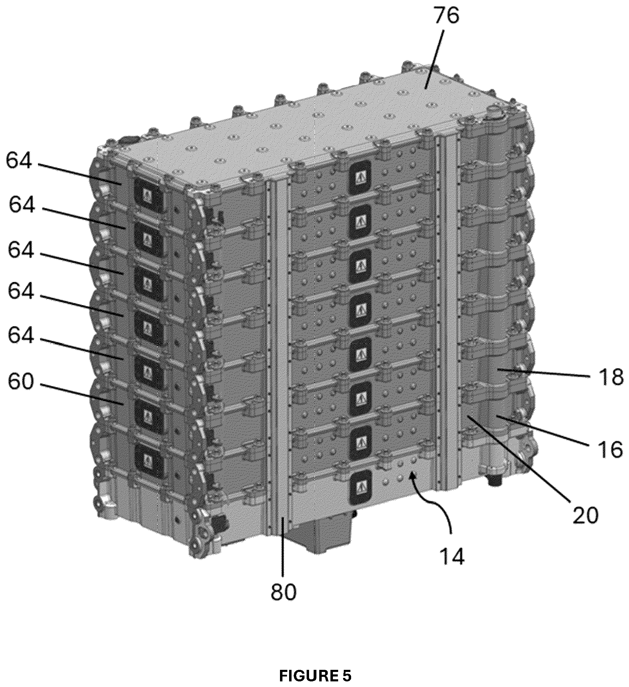

**Figure 5** shows a perspective view of an electrical power storage system according to an embodiment of the invention.

### DETAILED DESCRIPTION

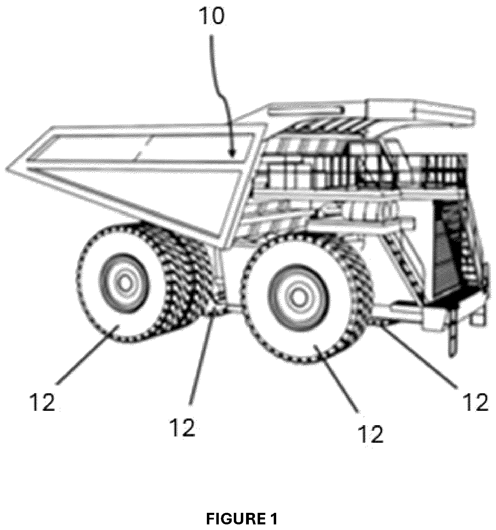

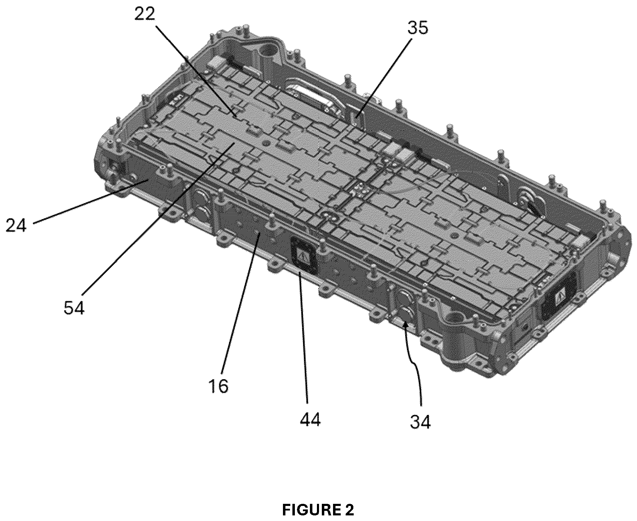

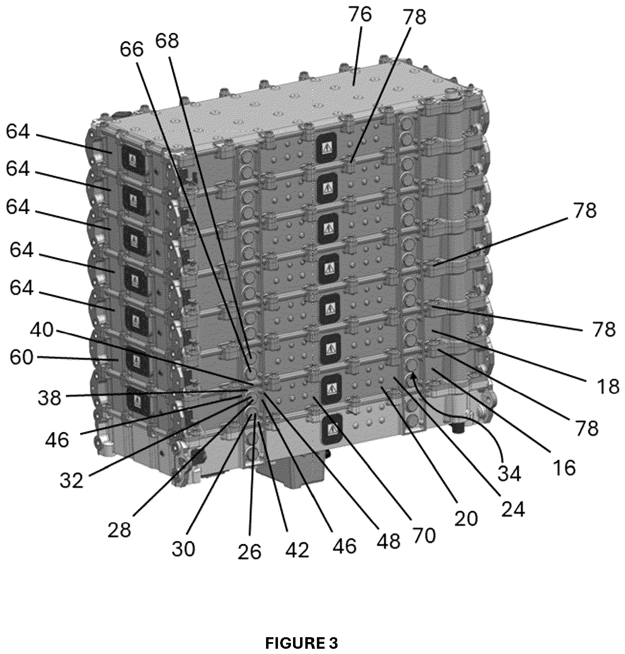

Referring to Figure 1, a battery electric vehicle, in this case a haul truck, is generally shown at 10. Travel of the vehicle 10 is driven by an electric motor which drives wheels 12 of the vehicle 10. The electric motor is powered by multiple electrical power sources, in this case traction batteries of an electrical power storage system 14 discussed further below with reference to Figures 2 and 3.

Referring to Figures 2 and 3, a tray 16 of the electrical power storage system 14 is shown. The tray 16 is arranged, in cooperation with a sealing lid provided by a bottom wall of a further tray 18 to be sealed on top of the tray 16, to provide an electrical power source enclosure 20. The enclosure 20 is arranged to seal within it an electrical power source, in this case a traction battery 22. The traction battery 22 is electrically connected to the electrical motor in order to contribute to powering travel of the vehicle 10.

The tray 16 has an enclosure side wall 24 which is substantially vertically arranged when installed in the vehicle 10. Passing through the enclosure side wall 24, from the inside of the enclosure 20 to an outside of the enclosure 20, is a first venting aperture 26 and a second venting aperture 28. Each of the first 26 and second 28 venting apertures are substantially circular in cross-section and are sealed by respective first 30 and second 32 burst discs. The second venting aperture 28 is at a higher level than the first venting aperture 26. Specifically, in this embodiment, the second venting aperture 28 is immediately above and vertically aligned with the first venting aperture 26.

The enclosure 20 also has additional instances of the first 26 and second 28 venting apertures generally shown at 34. For simplicity, only the first 26 and second 28 venting apertures, the way in which they are used and further features used in combination with them (as discussed below) are detailed. Nonetheless, as will be appreciated, the same applies mutatis mutandis with respect to each of the additional instances 34.

The enclosure 20 also has a suppressant inlet 35 via which a stored liquid suppressant, used to manage a thermal event (e.g. overheating of one or more cells of the traction battery 22 and/or a battery fire) is selectively deliverable. The suppressant may for instance be selectively pumped into the enclosure 20 or delivered under pressure from a stored gas used as a propellant.

Surrounding the first 26 and second 28 venting apertures outside of the enclosure 20 is a suppressant collector 36. The suppressant collector 36 is formed by a series of walls as follows:
- A collector rear wall 38 formed by an area of the enclosure side wall 24 surrounding the first 26 and second 28 venting apertures;
- A collector top wall 40 formed by an extension of an enclosure top wall of the enclosure 20 (in this case the bottom wall of the further tray 18) which forms a flange projecting perpendicularly outwards with respect to the enclosure side wall 24;
- A collector bottom wall 42 formed by an extension of an enclosure bottom wall 44 of the enclosure 20 which forms a flange projecting perpendicularly outwards with respect to the enclosure side wall 24;
- A pair of opposed collector side walls 46 formed by substantially vertically extending respective ribs 48 projecting perpendicularly outwards from and intrinsically formed with the enclosure side wall 24; and
- A collector front wall 50 comprising a plate sealed to respective projecting edges of the collector bottom wall 42 and collector side walls 46.

The suppressant collector 36 provides a sealed structure with the exception of the first 26 and second 28 venting apertures and an exit aperture 52 provided through the front wall 50. The exit aperture 52 is provided at the top of the collector front wall 50 and substantially spans its width. The cross-sectional area of the exit aperture 52 is substantially equal to that of the first 26 and second 28 venting apertures. The exit aperture 52 is substantially rectangular. All of the exit aperture 52 is at a higher level than all parts of the first venting aperture 26. Indeed, part of the of exit aperture 52 is at a higher level than part of the second venting aperture 26. Further, all of the exit aperture 52 is at a higher level than a top 54 of the traction battery 22 in the enclosure 20. As will be appreciated, the references above to height levels can be considered taken from a horizontal reference plane which may for instance correspond (at least substantially) with the bottom wall 44 of the enclosure 20 when in a nominal orientation installed in the vehicle 10 when the vehicle 10 is resting on level ground.

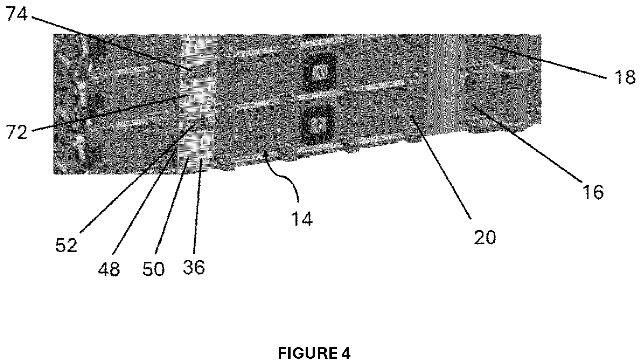

Referring now to Figure 3 and 4, a further electrical power source enclosure 60 is provided stacked on top of the electrical power source enclosure 20. Together, in this embodiment, they form part of a modular electrical power storage system also comprising additional such enclosures 64 which further extend the stack. The further enclosure 60 has the further tray 18, the bottom wall of which also forms a top wall of the enclosure 20 (i.e. the sealing lid to enclosure 20) when they are stacked.

The further enclosure 60 is the same as the enclosure 20. It has its own further electrical power source (in this case a further traction battery), its own further first 66 and further second 68 venting apertures passing through its own further enclosure side wall 70 and its own further suppressant inlet. It is also associated with a further suppressant collector 72 having the same design and relation to the further enclosure 60 as the suppressant collector 36 has to the enclosure 20. In particular, all of a further exit aperture 74 of the further suppressant collector 70 is at a higher level than all parts of the further first venting aperture 64.

This approach is repeated for the multiple additional enclosures 64 stacked on top of the further enclosure 60. For the topmost of these additional enclosures 64, a capping top plate 76 is applied to complete and seal its enclosure. The further traction battery and additional traction batteries provided in the additional enclosures 64 are each electrically connected to the electrical motor in order to contribute to powering travel of the vehicle 10.

The substantially vertically extending ribs 48 are replicated with respect to the further enclosure 60 and all of the additional enclosures 64 are therefore aligned across the enclosure 20, further enclosure 60 and additional enclosures 64. They provide strength to their respective enclosures as well as the side walls for their respective suppressant collectors.

The extension of the enclosure top wall of the enclosure 20 runs around substantially the entire enclosure 20 and the extension of the enclosure bottom wall 44 of the enclosure 20 runs around substantially the entire enclosure 20. Further, this is replicated with respect to the further enclosure 60 and the additional enclosures 64 providing the basis for multiple bolting points 78 between the enclosures in order to secure each to its neighbour(s).

A stand-off cover 80 creates a common exhaust conduit in fluid communication with the exit aperture 52, further exit aperture 74 and additional exit apertures associated with the additional enclosures 64. The stand-off cover covers the exit aperture 52, further exit aperture 74 and additional exit apertures associated with the additional enclosures 64. The stand-off cover does not however close the exit aperture 52, further exit aperture 74 or additional exit apertures associated with the additional enclosures 64, in view of its profiled shape which creates the common exhaust conduit. The stand-off cover 80 is sealed along its side edges to the ribs 48 and equivalents associated with the further enclosure 60 and additional enclosures 64. This is better facilitated by the alignment, common form and vertical arrangement of the ribs 48 and their equivalents associated with the further enclosure 60 and additional enclosures 64. The stand-off cover 80 is also sealed along its top edge. The common exhaust conduit therefore tends to direct fluid downwards and away from a cabin of the vehicle 10 and any envisaged cabin occupant escape routes and/or access points.

In use, the vehicle 10 may be operated with its travelling powered by the electrical power storage system 14. The electrical power storage system would be operating at this stage without the deployment of suppressant and with the enclosure 20, further enclosure 60 and additional enclosures 64 sealed.

In the further description below, a scenario in which a thermal event occurs in the enclosure 20 is described, but as will be appreciated, the explanation might equally well apply to the further enclosure 60 and any of the additional enclosures 64.

In the event of one or more cells of the traction battery 22 over-heating (e.g. in a manner that results in off-gassing), the enclosure 20 provides a first layer of protection, tending to isolate the traction battery 22 from other parts of the modular electrical power storage system as well as the remainder of the vehicle 10 and any occupants thereof. Where off-gassing causes sufficient pressure build up inside the enclosure 20, the first burst disc 30 sealing the first 26 venting aperture and/or the second burst disc 32 sealing the second 28 venting aperture may be burst. This allows gas within the enclosure 20 (including gas generated in the off-gassing) to be released via the relevant first 26 and/or second 28 venting apertures, suppressant collector 36, exit aperture 52 and common exhaust conduit, which vents to atmosphere away from the cabin of the vehicle 10 and potential access routes to and from the cabin.

Subsequently and/or meanwhile, the thermal event may be detected by one or more sensors (e.g. thermistors) in the enclosure 20 and a corresponding signal indicative of the thermal event may be sent by the relevant sensor or sensors to a control system of the vehicle 10. The control system may (e.g. if for instance the detected temperature exceeds a threshold) control release of liquid suppressant (in this case LifeSafe Pre-Trauma Fluid) stored on the vehicle 10 with a gaseous propellant. Consequently, the liquid suppressant enters the enclosure 20 via the suppressant inlet 35 and begins to collect in the enclosure 20. At least where the first burst disc 30 is burst, a part of the volume of liquid suppressant entering the enclosure 20 escapes via the first venting aperture 26 into the suppressant collector 36. Because however the level of the exit aperture 52 is higher than that of the first venting aperture 26, this does not result in the suppressant rapidly running away into the common exhaust conduit before the suppressant has accumulated to a desired level in the enclosure 20. Specifically, because all of the exit aperture 52 is at a higher level than all parts of the first venting aperture 26 and all of the exit aperture 52 is at a higher level than a top 54 of the traction battery 22, the suppressant will not dissipate via the exit aperture 52 and common exhaust conduit before the traction battery 22 is submerged in suppressant. In this way, the suppressant may be better able to suppress any fire, reduce heat and reduce the likelihood of thermal propagation (i.e. from one battery cell to another and/or to other traction batteries e.g. those associated with the further enclosure 60 and/or additional enclosures 64. Nonetheless, if sufficient suppressant is delivered to submerge the first venting aperture 26 and reach the level of the exit aperture 52, some suppressant is able to leave, together with generated gas, via the exit aperture 52 and common exhaust conduit.

As will be appreciated, whilst allowing (as described above) suppressant to submerge the traction battery 22 when released, the approach described may also allow sufficient flow area for generated gas venting via the first 26 and second 28 venting apertures and exit aperture 52, within a relatively narrow and low profile vertical corridor in terms of packaging requirement and without using enclosure top wall venting.

As will be appreciated, multiple instances of the modular electrical power storage system may be provided (e.g. in one vehicle) where for instance additional voltage and/or capacity is required.

It will be appreciated that various changes and modifications can be made to the present invention without departing from the scope of the present application.

## Claims

1. An electrical power storage system comprising an electrical power source enclosure and a suppressant collector, where
the enclosure is arranged to seal an electrical power source therein and comprises a first venting aperture arranged to allow venting of gas generated by the electrical power source when undergoing an over-heating event to outside of the enclosure, where the first venting aperture is provided through an enclosure side wall of the enclosure and where
the suppressant collector is arranged outside of the enclosure and to collect a part of a volume of liquid suppressant when released into the enclosure, the part of the volume of suppressant leaving the enclosure via the first venting aperture and where
the suppressant collector comprises an exit aperture providing an exit from the suppressant collector, where the exit aperture is at a higher level than the first venting aperture.

2. The electrical power storage system according to claim 1 where all of the exit aperture is at a higher level than all parts of the first venting aperture.

3. The electrical power storage system according to claim 1 or claim 2 where all of the exit aperture is at a higher level than a top of the electrical power source when installed in an operational configuration in the enclosure.

4. The electrical power storage system according to any preceding claim where the first venting aperture is substantially circular.

5. The electrical power storage system according to any preceding claim where the exit aperture is substantially rectangular.

6. The electrical power storage system according to any preceding claim where the enclosure comprises a second venting aperture also arranged to allow venting of gas generated by the electrical power source when undergoing an over-heating event to outside of the enclosure and where the second venting aperture is provided through the enclosure side wall and is at a higher level than the first venting aperture.

7. The electrical power storage system according to any preceding claim where the enclosure side wall also serves as collector rear wall of the suppressant collector.

8. The electrical power storage system according to any preceding claim where a collector top wall of the suppressant collector is formed by an extension of an enclosure top wall of the enclosure and/or a collector bottom wall of the suppressant collector is formed by an extension of an enclosure bottom wall of the enclosure.

9. The electrical power storage system according to any preceding claim where at least one collector side wall of the suppressant collector is formed by a rib projecting from the enclosure side wall.

10. An electrical power storage system according to any preceding claim comprising a further electrical power source enclosure and a further suppressant collector, where
the further enclosure is arranged to seal a further electrical power source therein and comprises a further first venting aperture arranged to allow venting of gas generated by the further electrical power source when undergoing an over-heating event to outside of the further enclosure, where the further first venting aperture is provided through a further enclosure side wall of the further enclosure and where
the further suppressant collector is arranged outside of the further enclosure and to collect a further part of a further volume of liquid suppressant released into the further enclosure, when the further part of the further volume of suppressant leaves the further enclosure via the further first venting aperture and where
the further suppressant collector comprises a further exit aperture providing an exit from the further suppressant collector, where the further exit aperture is at a higher level than the further first venting aperture, and
the enclosure and further enclosure are arranged for use in a stacked manner with one on top of the other.

11. An electrical power storage system according to claim 10 where the exit aperture and further exit aperture feed a common exhaust conduit arranged to deliver the generated gas and/or the suppressant to or towards an external vent.

12. An electrical power storage system according to claim 10 or claim 11 where the further suppressant collector is arranged with respect to the further enclosure in a corresponding manner to the suppressant collector with respect to the enclosure.

13. A vehicle comprising the electrical power storage system of any of claims 1-12.

14. The vehicle of claim 13 where the electrical power source is a traction battery of the vehicle.
